# EUROPEAN PATENT SPECIFICATION

(11) **EP 2 357 092 B1**
(45) Date of publication and mention of the grant of the patent: **01.05.2013**
(21) Application number: 11001040.2
(22) Date of filing: 09.02.2011
(51) Int. Cl.: B60B 17/00

(54) **A high-yielding wheel of track vehicles**
Hochnachgiebiges Rad für Schienenfahrzeuge
Roue à haut souplesse de véhicules sur rails

(30) Priority: 09.02.2010 CZ 20100097
(43) Date of publication of application: 17.08.2011
(73) Proprietor: Bonatrans Group a.s., 735 94 Bohumín (CZ)
(72) Inventor: Martinàsek, Marek, 74243 Pustejov (CZ); Pavco, Jaromir,, 73531 Bohumín-Skrecon (CZ)
(74) Representative: Pelikanova, Ivana

(56) References cited:
- DE-A1-102005 030 966
- GB-A- 390 953
- US-A- 2 244 633
- US-A- 2 555 023

## Description

### Field of the Invention

The invention relates to the design of a rubber cushioned compound wheel of track vehicles, especially to a tram and railway vehicle wheel, comprising a disk, a rim, rubber blocks, a thrust ring and a locking ring with connecting material. Particularly, the invention solves the shape and the design of mounting of the elastic member, it is of the rubber blocks, in the wheel.

### Background of the Invention

The compound, rubber cushioned wheels of track vehicles are known from practice for a long time. They comprise a disk and a rim, with an elastic member inserted between them, which elastic member is held in the given place by a shape accommodated thrust ring, which thrust ring is connected with the wheel disk for example by screws or by a locking ring. The elastic member is usually made of two rubber rings or it is an integral rubber ring, eventually, a number of rubber segments, placed in the disk and rim groves, is used. The shape of such integral rubber segment resembles the shape of an open letter V or U. In case of two rubber rings, the rings are placed perpendicularly or obliquely to the wheel axis. Usually, the rubber segments or the rings are integral, non-perforated, to obtain high wheel rigidity under load.

The cushioned wheels with rubber rings are disclosed, for example, in the patent documents DE 24 06 206, DE 44 30 342, DE 33 18 617, DE 59 4792 or EP 1 896 274, which documents solve shape and gripping of the elastic members in the wheel with the objective to optimize axial rigidity and good radial cushioning properties of the wheel.

A disadvantage of these known solutions, in particular of that disclosed in the EP 1 896 274 that forms the closest prior art according to the preamble of claim 1, is the fact that the rubber rings are vulcanized on a carrying metal sheet in the shape of an annular ring. These metal sheets are necessary to guide the rubber during deformation of the wheel rim with regard to the wheel disk. A disadvantage is also the high pre-tension of the rubber rings in the axial direction, where the restoring force, resulting from the pre-tension, is born by bevels of the conical surfaces on the wheel hub and the thrust ring. Due to this structural design, the wheel is more difficult to dismantle, and there is so the risk to damage the thrust ring and the disk. To increase safety, it is necessary to secure the joint evenly around the perimeter by evenly spaced screwed joints, whereby the wheel production costs are increased.

To avoid sliding of the wheel rim with regard to the disk, it is necessary to use one or more metal parts, such as pins, firmly connecting the rim with the wheel disc, which makes the entire design, manufacture and installation of a wheel more complicated.

The other known solutions of the cushioned wheels have always one group of rubber segments between the wheel rim and the wheel disk, which group is deployed around the wheel circumference. Under load by the maximum radial force, the rim to disk deformation is minimal only, because such structures allow transferring of the vertical forces only in the areas of their action and in the nearest vicinity, and by this the rubber segments are overloaded. During the action of axial forces, such as during driving in a curve or on the switches, on the contrary large deformation of the wheel rim with regard to the wheel disk takes place. To achieve the required safety during the operation of the wheel, it is necessary to use rubber segments with higher hardness and stiffness for the manufacture, what results in reduced service life of these segments.

### Summary of the Invention

These deficiencies are largely eliminated by a high-yielding wheel of track vehicles, consisting of a rim, a disc and damping rubber blocks evenly spaced around the wheel perimeter between the disc and the rim and between the rim and a thrust ring, which thrust ring is located on the inner side of the wheel or on the external side of the wheel and is held by a locking ring, which locking ring is secured by a screw connection, which comprises in that the rubber blocks have the shape of ring sectors and in radial direction they are placed perpendicularly to the axis of rotation of the wheel, with each rubber block either consisting of two independent separate rubber segments, or being roughly in the middle of its height around the perimeter provided with a dividing groove for inserting on the disc and on the thrust ring of the wheel, wherein the dividing groove divides the rubber block into two connected rubber segments and the supporting surfaces on the rim, the disc and the thrust ring of the wheel for interaction and mounting of the rubber blocks are formed by ring-shaped grooves, which ring-shaped grooves are adapted to the shape of the rubber blocks.

Preferably, it is possible to use the rubber blocks that are provided with a recess or a protrusion for insertion into the disc or the thrust ring of the wheel on their face surface.

Also preferable is the embodiment of the high-yielding wheel of track vehicles, where the sum of the volumes of the inner rubber segments is equal to from 0.8 to 1.2 multiple of the sum of the volumes of the external rubber segments.

Preferably, it is possible to use rubber blocks, which have different thicknesses of the rubber segments in the radial cross-section.

An advantage of such structure of a cushioned wheel is the fact that due to the specified shape and location of rubber segments along the perimeter of the wheel, a several times higher wheel rim deformation than what is that of its disk takes place during loading of the wheel by radial force in comparison to the prior art wheels with rubber segments.

This benefit arises because at one moment the radial force is transferred by a higher number of rubber segments, since their relieving in the axial direction does not take place, what causes a more even distribution of compressive forces between the rubber segments and the rim, the disc and the pressing ring of a wheel. The arrangement of rubber segments in two rows, one above the other, allows to select a softer compound for production of the segments and to achieve so an increase in their lifetime, while maintaining safety of operation.

Also, an advantage is the fact that by modifying the height of the toothed ring in the axial direction, which separates the ring grooves for placement of the rubber blocks in the wheel disc and the thrust ring and by modifying the radial radius of this toothed ring, and this with regard to the size of the rubber segments, it is possible to modify magnitude of the radial and the axial stiffness of the wheel as required.

The magnitude of the axial stiffness of the wheel can be varied also by altering the distance of the rubber blocks from the vertical axis of the wheel rim in radial cross-section, wherein this distance can be both symmetrical and asymmetrical.

Also, the size of the axial stiffness of the wheel can be varied by varying the distance of the rubber blocks to the vertical axis of the wheel rim in radial cross-section, wherein this distance can be both symmetrical and asymmetrical.

If the rubber blocks are provided with a recess or a protrusion for insertion into the disc or the thrust ring on the front face, turning of the disk or the thrust ring by an angle with regard to the wheel rim in tangential direction is so prevented.

The so designed wheel reduces noise generated by rolling of the wheel on the rail significantly and reduces vibrations during riding of a vehicle in turns with small radii, since its substantial advantage is the high-yielding of the rim with regard to the disk, what helps in the chassis suspension and improves comfort of riding for passengers in the vehicle.

### Brief Description of the Drawings

Figure 1 shows in cross-section a half of a high-yielding wheel of a track vehicle, where the rubber blocks are made up of two separate segments;
Figure 2 shows in cross-section a half of the wheel, where the rubber blocks are provided with a dividing groove;
Figure 3 shows an example of the shape of a rubber block, which rubber block comprises of two separate rubber segments;
and Figure 4 shows a rubber block provided with a dividing groove.

### Examples of embodiments of the present invention

### Example 1

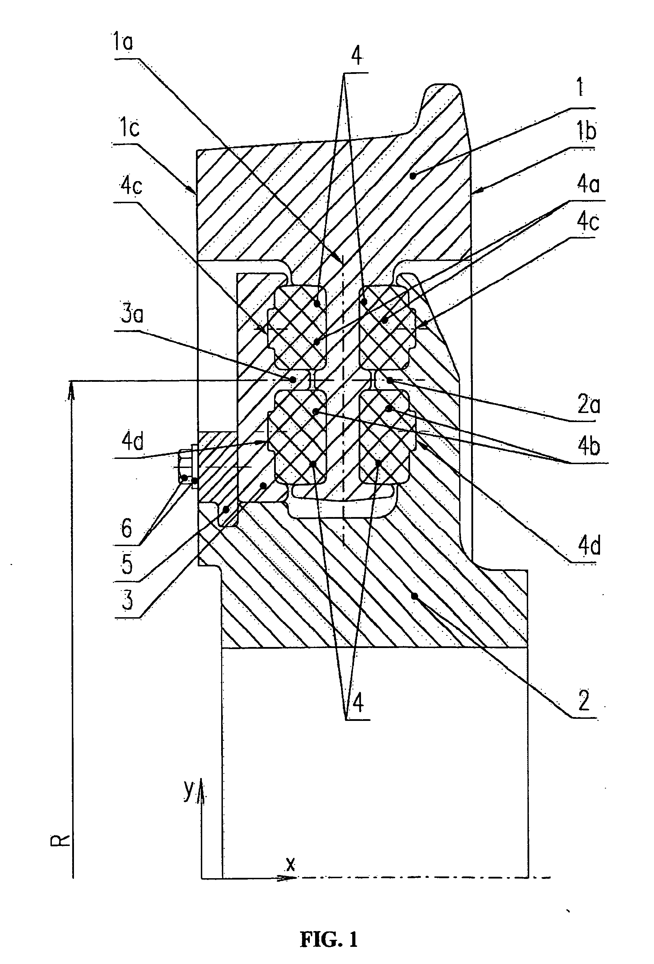

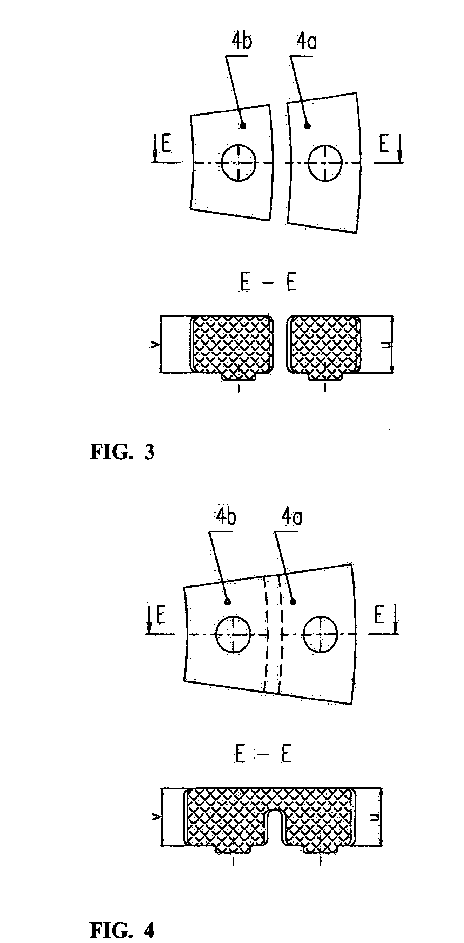

A high-yielding wheel of track vehicles, as shown in Figures 1 and 3, comprises a wheel rim 1, a wheel disc 2, a thrust ring 3, a locking ring 5, a screw connection 6, and rubber blocks 4. The rubber blocks 4 are evenly placed along the wheel perimeter between the wheel disc 2 and the wheel rim 1, and between the wheel rim 1 and the thrust ring 3, which thrust ring 3 is located on the inner side 1c of the wheel, and is held by the locking ring 5 secured against dislocation by screw connection 6. Each of the rubber blocks 4 comprises two separate rubber segments 4a and 4b, which segments 4a and 4b have substantially quadrilateral shape in radial cross-section after a wheel assembly and the thickness u of the rubber segment 4a is less than the thickness v of the rubber segment 4b in the radial cross-section. The support area for interaction with the rubber segments 4a and 4b is formed by two ring-shaped grooves on both sides of the radially inner side of a wheel rim 1 and the support surfaces on axially inner sides of the wheel disk 2 and the thrust ring 3 are also formed by two ring-shaped grooves that separate the tooth ring 2a, 3a at about half of the radial height of the supporting space, with mean radius R. Each rubber segment 4a, 4b is provided with protrusions 4c, 4d, for insertion into the wheel thrust ring 3 and into the wheel disk 2, and the distance of the rubber blocks 4 from the vertical axis 1a of the wheel rim 1 is symmetrical.

### Example 2

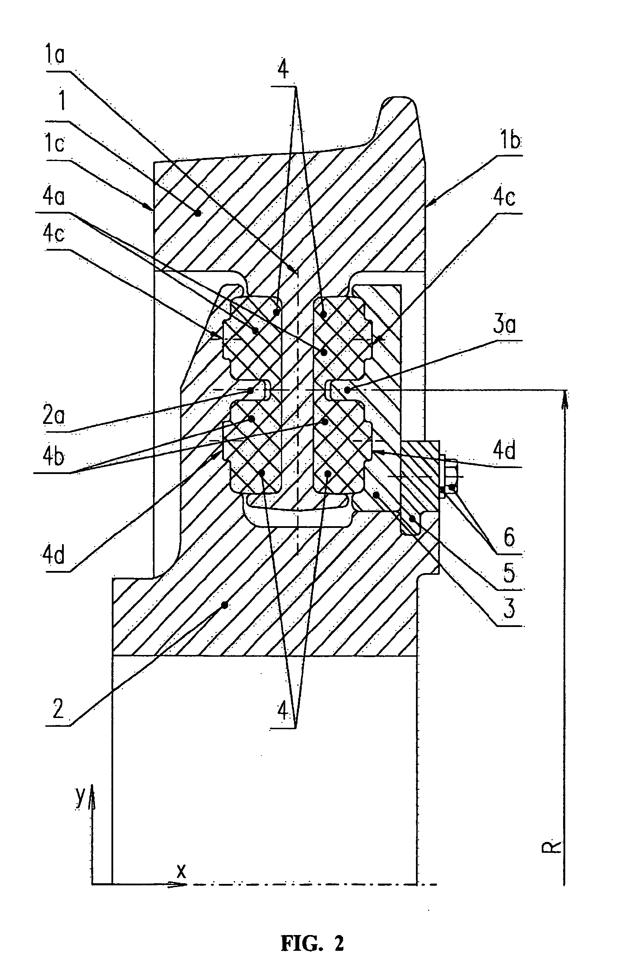

A high-yielding wheel of track vehicles, as shown in Figures 2 and 4, comprises a wheel rim 1, a wheel disc 2, a thrust ring 3, a locking ring 5, screw connection 6, and rubber blocks 4. The rubber blocks 4 are evenly placed along the wheel perimeter between the wheel disc 2 and the wheel rim 1 and between the wheel rim 1 and the thrust ring 3, which thrust ring 3 is located on the external side 1b of the wheel, and is held by the locking ring 5, which locking ring 5 is secured against moving out by screw connection 6. At about half of its height around the perimeter, each rubber block 4 is provided with a dividing groove for attaching to the disk 2 or to wheel thrust ring 3, wherein this dividing groove divides the entire rubber block 4 into two joined rubber segments 4a and 4b, which segments 4a and 4b have the shape of rectangle substantially in radial cross-section after the wheel assembly and the thickness u of the rubber segment 4a is less than the thickness v of the rubber segment 4b in radial cross-section. The supporting area for interaction with the rubber segments 4a and 4b is formed by a ring groove on both sides of the radially inner side of the wheel rim 1 and the supporting surfaces on the axially inner sides of the wheel disc 2 and the wheel thrust ring 3 is formed by two ring-shaped grooves, which ring-shaped grooves are at about one half of the radial height of the supporting surface separated from each other by the toothed ring 2a, 3a having mean radius R. Each rubber segment 4a, 4b is provided with a protrusion 4c, 4d for inserting into the wheel disc 2 and into the wheel thrust ring 3, and the distance of the rubber blocks 4 to the vertical axis 1a of the wheel rim 1 is symmetrical.

### Industrial Use

The high-yielding wheel can be used for all models of track vehicles, preferably for the tram and railway wheels, where the present wheel reduces noise significantly during vehicle operation.

## Claims

1. A high-yielding wheel of track vehicles, consisting of a rim (1), a disc (2) and damping rubber blocks (4) evenly spaced around the wheel perimeter between said disc (2) and said rim (1) and between said rim (1) and a thrust ring (3) , which thrust ring (3) is located on the inner side (1c) of said wheel or on the external side (1b) of said wheel and is held by a locking ring (5), which locking ring (5) is secured by a screw connection (6), **characterized in that** said rubber blocks (4) have the shape of ring sectors and in radial direction they are placed perpendicularly to the axis of rotation of said wheel, with each rubber block (4) either consisting of two independent separate rubber segments (4a, 4b), or being roughly in the middle of its height around the perimeter provided with a dividing groove for inserting on said disc (2) and on said thrust ring (3) of said wheel, wherein said dividing groove divides said rubber block (4) into two connected rubber segments (4a, 4b) and the supporting surfaces on said rim (1), said disc (2) and said thrust ring (3) of said wheel for interaction and mounting of said rubber blocks (4) are formed by ring-shaped grooves, which ring-shaped grooves are adapted to the shape of said rubber blocks (4).

2. The high-yielding wheel of track vehicles according to claim 1, **characterized in that** said rubber blocks (4) are provided with a recess or a protrusion (4d) for insertion into said disc (2) or said thrust ring (3) on their face surface.

3. The high-yielding wheel of track vehicles according to claims 1 and 2, **characterized in that** the sum of the volumes of said inner rubber segments (4b) is equal to from 0.8 to 1.2 multiple of the sum of the volumes of said external rubber segments (4a).

4. The high-yielding wheel of track vehicles according to claims 1 - 3, **characterized in that** said rubber blocks (4) have different thicknesses (u, v) of said rubber segments (4a, 4b) in the radial cross-section.

## Patentansprüche

1. Hochnachgiebiges Rad der Schienenfahrzeuge, gebildet durch eine Felge (1), eine Scheibe (2), und dämpfende Gummiblöcke (4), die auf dem Radumfang zwischen der Scheibe (2) und der Felge (1) und zwischen der Felge (1) und dem auf der inneren Seite (1c) des Rades oder auf der äußeren Seite (1b) des Rades angeordnetem und von einem durch eine Schraubverbindung (6) gesicherten Haltering (5) gehaltenem Klemmring (3) gleichmäßig beabstandet sind, **dadurch gekennzeichnet, dass** die Gummiblöcke (4) die Form eines ringförmigen Sektors aufweisen und in radialer Richtung senkrecht zu der Drehachse des Rades angeordnet sind, wobei jeder Gummiblock (4) entweder aus zwei unabhängigen separaten Gummisegmenten (4a, 4b) besteht, und/oder etwa in der Mitte seiner Höhe entlang dem Umfang mit einer Teilungsnut zum Einschieben auf die Scheibe (2) und auf den Klemmkring (3) des Rades versehen ist, wobei diese Teilungsnut den Gummiblock (4) in zwei zusammen gebundene Gummisegmente (4a, 4b) unterteilt, und die Auflageflächen auf der Felge (1), der Scheibe (2), und dem Klemmring (3) des Rades für das Zusammenwirken und die Aufnahme der Gummiblöcke (4) durch ringförmige Nuten gebildet sind, die an die Form der Gummiblöcke (4) angepasst sind.

2. Hochnachgiebiges Rad der Schienenfahrzeuge nach Anspruch 1, **dadurch gekennzeichnet, dass** die Gummiblöcke (4) auf der vorderen Oberfläche mit einer Ausnehmung oder einem Vorsprung (4d) zum Einschieben in die Scheibe (2) oder in den Klemmring (3) versehen sind.

3. Hochnachgiebiges Rad der Schienenfahrzeuge nach Ansprüchen 1 und 2, **dadurch gekennzeichnet, dass** die Summe der Volumina der inneren Gummisegmenten (4b) dem 0,8-fachen bis 1,2-fachen der Summe der Volumina der äußeren Gummisegmenten (4) gleich ist.

4. Hochnachgiebiges Rad der Schienenfahrzeuge nach Ansprüchen 1 bis 3, **dadurch gekennzeichnet, dass** die Gummiblöcke (4) im radialen Schnitt unterschiedliche Dicken (u, v) der Gummisegmenten (4a, 4b) aufweisen.

## Revendications

1. Roue hautement souple pour des voitures de voie comportant un bandage (1), un disque (2) et des blocs (4) amortissants en caoutchouc répartis proportionnément sur la circonférence de la roue entre le disque (2) et le bandage (1) et entre le bandage (1) et l'anneau (3) de pression lequel est placé sur le côté intérieur (1c) de la roue ou sur le côté extérieur (1b) de la roue en étant tenu par une bague (5) de blocage verrouillée par un assemblage (6)boulonné, **caractérisée en ce que** lesdits blocs (4) amortissants en caoutchouc présentent une forme de secteur annulaire et sont placés, dans le sens radial, perpendiculairement à l'axe de rotation de roue, chaque bloc (4) en caoutchouc est formé soit de deux segments (4a, 4b) en caoutchouc indépendents et séparés, soit il est muni, sur sa circonsférence sensiblement à la moitié de sa hauteur, d'une rainure de séparation pour l'introduire dans ledit disque (2) et dans ledit anneau (3) de pression de la roue, ladit rainure de séparation divise ledit bloc (4) en caoutchouc en deux segments (4a, 4b en caoutchouc) unis, les surfaces d'appui sur ledit bandage (1), sur ledit disque (2) et sur ledit anneau (3) de pression de la roue sont formés, en vue de cooperation et de fixation des blocs (4) en caoutchouc, par des rainures annulaires qui sont ajustées conformément à la forme des blocs (4)en caoutchouc.

2. Roue hautement souple pour des voitures de voie selon la revendication 1, **caractérisée en ce que** les blocs (4) en caoutchouc sont munis, sur leur face frontale, d'un évidement ou d'une saillie (4d) permettant leur engagement dans ledit disque (2) ou dans ledit anneau (3)de pression.

3. Roue hautement souple pour des voitures de voie selon la revendication 1 et 2, **caractérisée en ce que** la somme des volumes des segments (4b) en caoutchouc intérieurs est égal à 0,8 à 1,2 du multiple de la somme des volumes des segments (4a) en caoutchouc extérieurs.

4. Roue hautement souple pour des voitures de voie selon la revendication 1 à 3, **caractérisée en ce que** les blocs (4) en caoutchouc présentent dans leur section radiale des épaisseurs (u, v) différentes.
